# EUROPEAN PATENT APPLICATION

(11) **EP 4 778 982 A1**
(43) Date of publication of application: **22.07.2026**
(21) Application number: 25152295.9
(22) Date of filing: 16.01.2025
(51) Int. Cl.: C09B 23/14, C09B 67/22, C09B 67/44, D06L 4/60, D06M 13/358, D21C 9/00, D21H 17/07, C11D 3/42

(54) **STORAGE-STABLE FLUORESCENT WHITENING AGENT COMPOSITIONS**

(71) Applicant: Indulor Leverkusen GmbH & Co. KG, 49577 Ankum (DE)
(72) Inventor: HAUSCHEL, Bernd, 51467 Bergisch Gladbach (DE); HAFERMANN, Marco, 51467 Bergisch Gladbach (DE); KRAEMER, Michael, 51515 Kürten (DE)
(74) Representative: Bardehle Pagenberg Partnerschaft mbB Patentanwälte Rechtsanwälte

(57) **Abstract**

The present invention relates to fluorescent whitening agent compositions containing at least two specific disulfo-type fluorescent whitening agents for optically whitening paper or board, to a specific fluorescent whitening agent, and to their use. In addition, the present invention relates to a process for preparing a fluorescent whitening agent composition or a fluorescent whitening agent.

## Description

The present invention relates to compositions of fluorescent whitening agents, containing at least two specific disulfo-type fluorescent whitening agents. The described compositions are suitable for whitening paper, paperboard and cotton fabric.

It is well known that fluorescent whitening agents (FWAs) are used to increase the brightness and whiteness of cellulose fibers. FWAs are typically utilized for the production of paper and board, for producing textiles based on cotton, and as detergent additive. The whiteness of paper and board can be significantly increased by the addition of FWAs. The most important fluorescent whitening agents used in the paper and board industry are substituted bis-triazinyl derivatives of 4,4'-diaminostilbene-2,2'-disulfonic acid. Typical substituents consist of aniline moieties or sulfonated aniline moieties. Within this chemical class of fluorescent whitening agents, disulfo-type, tetrasulfo-type and hexasulfo-type products are known, denoting the number of sulfonic acid groups in the FWA molecule. The disulfo-type FWAs, bearing no sulfonic acid groups at the aniline rings, have a quite low solubility in water and a high affinity towards cellulose fibers. Therefore, they are especially suitable for the use at the wet end of the papermaking process. The hexasulfo-type FWAs, bearing two sulfonic acid groups at each of the aniline rings, have a high water solubility and a quite low affinity towards cellulose fibers. Therefore these products are typically used for the whitening of paper by surface application, and the whitening of paper coatings. Hexasulfo-type FWAs are often used when very high paper whiteness is targeted. Tetrasulfo-type FWAs, bearing one sulfonic acid group at each of the aniline rings, exhibit a behaviour between the disulfo- and hexasulfo-type FWAs. They are the most commonly used products for whitening and brightening of paper and board.

The paper and board industry demands FWAs to be supplied in a liquid form, preferably as concentrated aqueous solutions, which should be stable to prolonged storage over a wide temperature range. This ensures ease of handling and metering of these products and avoids disturbances and deposits, which may in turn lead to undesired downtimes. Due to the low solubility of disulfo-type FWAs in water, it is very common to add solubilizing additives such as urea, 2-(dimethylamino)ethanol, triethanolamine or diethylene glycol to concentrated aqueous solutions of disulfo-type FWAs. These solubilizing additives may be present in concentrations up to 30 weight-%, to ensure dissolution of the disulfo-type FWAs in the needed amount, and to provide storage stability to these concentrated aqueous FWA formulations. During FWA application in a papermaking process, these solubilizing additives mostly remain in the circulating water and the effluent of the paper mill, where they are undesired due to the negative effects caused. These additives will increase the COD load of the effluent of the paper mill. Moreover, they may cause negative effects in the circulating water of the paper machine, like increased growth of bacteria, or undesired interactions with biocides used in the paper machine wet end. Even if these additives typically have no or very low affinity towards cellulose fibers, still a portion of them may end up in the final paper and cause there problems like undesired odor. Some of these additives, e.g. triethanolamine, are restricted regarding their maximum allowed content in papers intended for food contact.

EP 1 752 453 A1 teaches storage-stable solutions of certain disulfo-type FWAs, containing specific counter ions to the anionic charges on the FWA molecule, which counter ions are derived from specific alkanolamines.

WO 02/055646 A1 and EP 2 478 153 A1 are disclosing concentrated aqueous solutions, containing at least two specific disulfo-type FWAs. However, there is still a need to furthermore improve these compositions.

Alternatively, slurries or dispersions of disulfo-type FWAs in water are known, e.g. from EP 0 884 312 B1. However, these products typically require continuous stirring in the storage tanks at the paper mill, in order to ensure homogeneous metering into the papermaking process. Thus, these products cause higher equipment and operational cost.

Surprisingly, it has been found that problems of the prior art can be overcome by using mixtures or combinations of specific disulfo-type FWAs, bearing polar substituents at the aniline moieties. These mixtures are very well suitable for brightening and whitening paper and board, thus paper and board with improved brightness and whiteness can be produced by using these specific mixtures. Furthermore, the specific disulfo-type FWAs described hereinafter allow the formulation of storage-stable, concentrated aqueous solutions without addition of any solubilizing substances. Moreover, the production process of these specific FWAs is usually more cost-effective compared to the production process of the common disulfo-type FWAs that bear no substituents at the aniline moieties, since laborious isolation and filtration steps can be avoided.

Therefore, the present invention relates to fluorescent whitening agent compositions suitable for optically brightening and whitening cellulose fibers, in particular paper or board, wherein the composition contains at least two fluorescent whitening agents selected from the fluorescent whitening agents of formula **1**, formula **2** and formula **3:** 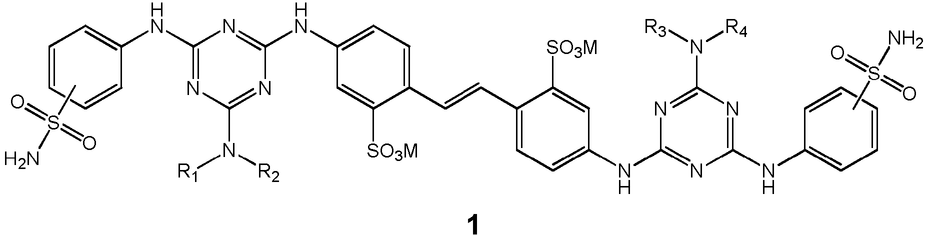 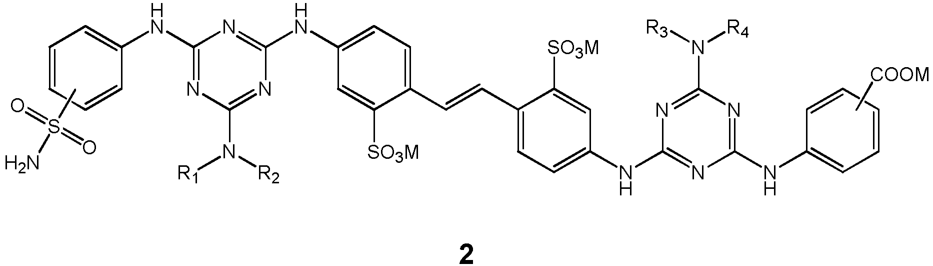 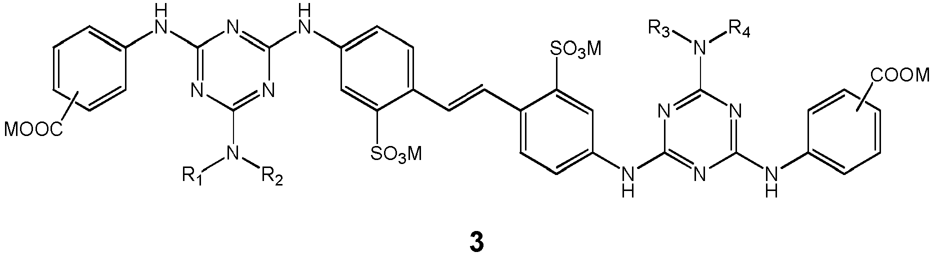 wherein
R₁, R₂, R₃ and R₄ represent, independently of each other, hydrogen, cyano, C₁-C₄ alkyl, C₂-C₄ cyanoalkyl, C₂-C₄ hydroxyalkyl, or C₁-C₄ alkoxyalkyl;
or R₁ and R₂ or R₃ and R₄ independently of each other together with the N atom form a morpholine, piperidine or pyrrolidine ring;
or R₁, R₂, R₃ and R₄ represent, independently of each other, -(CH₂)ᵢSO₃M, -(CH₂)ᵢCOOR, -(CH₂)ᵢCONHR, -(CH₂)ᵢOR, where i is an integer from 1 to 3, and R is C₁-C₃ alkyl or has the same meaning as M;
M represents hydrogen, or one equivalent of a cation, in particular Li, Na, K, Ca, Mg, ammonium, or ammonium which is mono-, di-, tri- or tetrasubstituted by C₁-C₄ alkyl or C₂-C₄ hydroxyalkyl, as well as mixtures of said cations.

The present invention also refers to a process for preparing these fluorescent whitening agent compositions. In addition, the present invention refers to the use of the fluorescent whitening agent compositions for optically whitening paper or board, particularly in the pulp suspension (stock), for whitening paper pulp in the wet end, or whitening paper or paper coatings in the surface, e.g. in size press, film press or coating applications. Furthermore, the present invention refers to the use of the fluorescent whitening agent compositions for optically whitening cotton fabric or as detergent additive.

Furthermore, the present invention relates to a process for whitening paper, and to paper obtainable by that process.

Preferred embodiments of the invention are described in the description hereinafter, the examples, and the claims.

According to the present invention, the fluorescent whitening agent composition contains at least two of the compounds of the above defined formulae **1**, **2** and **3**.

In the context of the invention, the alkyl groups in the formulae **1**, **2** and **3** can be linear or branched, and the possible substituents of the alkyl groups, which are alkoxy, cyano, or hydroxyl groups, can be attached at any position of the alkyl chains. Furthermore, in the context of the invention, C₁-C₄ alkoxyalkyl means C₁-C₄ alkyl substituted with C₁-C₄ alkoxy.

In a preferred embodiment, R₁, R₂, R₃ and R₄ represent, independently of each other, hydrogen, C₁-C₄ alkyl, C₂-C₄ hydroxyalkyl or C₁-C₄ alkoxyalkyl. Particularly preferably, R₁, R₂, R₃ and R₄ represent, independently of each other, hydrogen, methyl or C₂-C₄ hydroxyalkyl. Most preferably, R₁, R₂, R₃ and R₄ represent hydroxyethyl.

The -SO₂NH₂ substituents in formulae **1** and **2** may be attached either in the ortho-, meta- or para-position. The -COOM substituents in formulae **2** and **3** may be attached either in ortho- or para-position. In a preferred embodiment, the -SO₂NH₂ substituents in formulae **1** and **2** are located in the para-position, and the -COOM substituents in formulae **2** and **3** are located in the ortho-position.

Preferred embodiments of M are hydrogen, Na, K, and ammonium which is mono-, di-, tri- or tetrasubstituted by C₁-C₄ alkyl or C₂-C₄ hydroxyalkyl. Most preferably, M represents Na.

In preferred embodiments of the invention, the fluorescent whitening agent compositions contain at least two of the following fluorescent whitening agents: 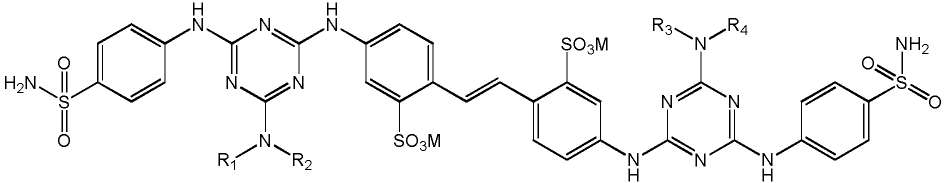 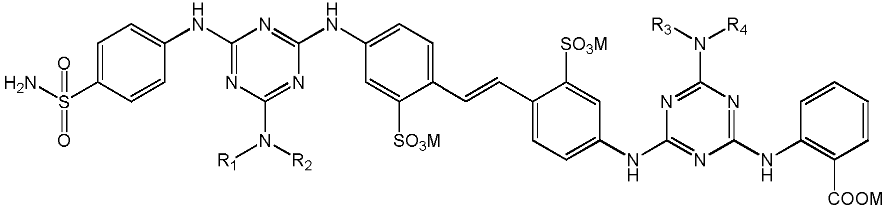 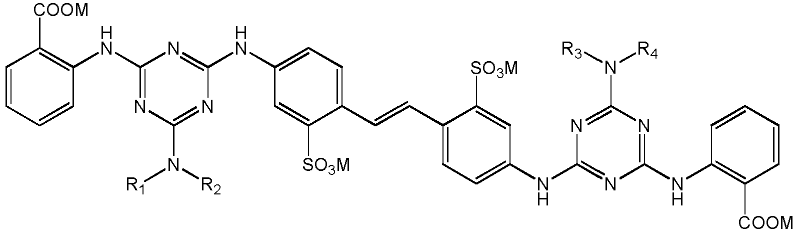 wherein R₁ to R₄ and M have the same meaning as defined above.

The fluorescent whitening agents of formulae **1, 2** and/or **3** and the mixtures thereof can be prepared according to known procedures. According to the invention, a process for preparing a fluorescent whitening agent composition or a fluorescent whitening agent as described herein comprises reacting, in step (a), cyanuric chloride with 4,4'-diaminostilbene-2,2'-disulfonic acid or a salt thereof; reacting, in step (b), the product obtained in step (a) with 2-aminobenzoic acid or 4-aminobenzoic acid or salts thereof, and 2-aminobenzenesulfonamide, 3-aminobenzenesulfonamide or 4-aminobenzenesulfonamide; and reacting, in step (c), the product obtained in step (b) with aliphatic amines, substituted aliphatic amines or heterocyclic compounds. The fluorescent whitening agents can be used as free acids or as salts thereof, preferably as alkali metal salts. Particularly, the compounds can be prepared by reacting in a first step 2,4,6-trichloro-1,3,5-triazine (cyanuric chloride) with 4,4'-diaminostilbene-2,2'-disulfonic acid or a salt thereof, then reacting the obtained product in a second step with ortho-aminobenzoic acid or para-aminobenzoic acid and 2-aminobenzenesulfonamide, 3-aminobenzenesulfonamide or 4-aminobenzenesulfonamide, and finally reacting the thus obtained product in a third step with aliphatic amines, substituted aliphatic amines or heterocyclic compounds. In the second step, for example, ortho-aminobenzoic acid and 4-aminobenzenesulfonamide can either be converted simultaneously or subsequently. Ortho-aminobenzoic acid or para-aminobenzoic acid are preferably reacted in a salt form, preferably as alkali salt. The ratio of, for example, ortho-aminobenzoic acid and 4-aminobenzenesulfonamide can be selected such that a desired ratio of the fluorescent whitening agents of formulae **1**, **2** and **3** is obtained in the resulting mixture. Exemplary preparation processes are shown in the preparation examples **1** to 6 below.

The composition containing the fluorescent whitening agents of formulae **1**, **2** and/or **3** can be directly produced in form of a mixture with the desired ratio of the compounds **1**, **2** and **3** as generally described above and as shown in the examples below. Alternatively, the composition can be produced by preparing the fluorescent whitening agents of formulae **1**, **2** and/or **3** separately by known methods, e.g., according to the general three-step synthetic process as described above, optionally followed by a purification procedure, and afterwards blending the separately prepared compounds of formulae **1**, **2** and/or **3** to produce a composition with the desired ratio. A specific fluorescent whitening agent of formula **1** can be prepared by a three-step preparation method as described in JP 47039216 A. In this method, the compound of formula **1** is finally obtained from the raw product solution by rendering this product solution acidic through addition of sulfuric acid, and thus precipitating the compound according to formula **1** in its free acid form, and subsequently isolating it by filtration as a solid material. This compound of JP 47039216 A has a substantially lower solubility than the composition of the invention containing at least two fluorescent whitening agents of formulae **1**, **2** and/or **3**.

The composition of the present invention contains at least two fluorescent whitening agents selected from the compounds of formulae **1, 2** and **3**. In one preferred embodiment, the composition comprises the fluorescent whitening agents of formulae **1** and **2.** In another preferred embodiment, the composition comprises the fluorescent whitening agents of formulae **1** and **3**. In a further preferred embodiment, the composition comprises the fluorescent whitening agents of formulae **2** and **3**. In a particularly preferred embodiment, the composition comprises the fluorescent whitening agents of formulae **1**, **2** and **3**. In addition, the composition may contain one or more known fluorescent whitening agents of the bis-triazinylaminostilbene type.

The amounts of the fluorescent whitening agents of formulae **1**, **2** and/or **3** in the composition depend on which fluorescent whitening agents are present, and on the number of fluorescent whitening agents in the composition. According to the present invention, the composition contains preferably at least one fluorescent whitening agent according to formula **1** in an amount of 0 to 99 weight-%, preferably 1 to 50 weight-%, most preferably 2 to 30 weight-%; at least one fluorescent whitening agent according to formula **2** in an amount of 0 to 99 weight-%, preferably 3 to 90 weight-%, most preferably 10 to 80 weight-%; and at least one fluorescent whitening agent according to formula **3** in an amount of 0 to 99 weight-%, preferably 3 to 90 weight-%, most preferably 10 to 80 weight-%; in each case based on 100 weight-% of the total amount of the present fluorescent whitening agents of formulae **1**, **2** and/or **3**.

In a further preferred embodiment, the composition comprises the fluorescent whitening agents of formulae **1, 2** and **3;** wherein the composition contains the fluorescent whitening agent according to formula **1** in an amount of 2 to 20 weight-%, the fluorescent whitening agent according to formula **2** in an amount of 15 to 65 weight-%, and the fluorescent whitening agent according to formula **3** in an amount of 25 to 70 weight-%, based on 100 weight-% of the total amount of the present fluorescent whitening agents of formulae **1**, **2** and **3**.

The fluorescent whitening agent composition of the present invention can be present in liquid form, in particular as a solution, preferably as aqueous solution, or in form of a powder. In preferred embodiments, the composition contains water, preferably in an amount of 10 to 95 weight-%, and more preferably in an amount of 55 to 90 weight-%, based on 100 weight-% of the total amount of fluorescent whitening agents and water.

The composition of the present invention, in particular an aqueous composition, may contain a small amount of additives. This might be of particular relevance for the use in cold regions, in order to enhance the storage stability of the composition in cold conditions. In a preferred embodiment, an aqueous composition according to the present invention contains less than 30 weight-%, more preferably less than 20 weight-%, in particular less than 10 weight-% of other components. The other components can be organic additives that are added to increase the storage stability, like, for example, solubilizing additives, standardizing agents, thickeners and preservatives. In a further preferred embodiment, an aqueous composition according to the present invention contains no organic co-solvents, such as hydroxyalkylamines or glycols, and/or urea. Particularly preferably, the composition is free from any additives, with the exception of preservatives to prevent growth of bacteria and fungi. Preferably, the composition essentially consists of the fluorescent whitening agents of formulae **1**, **2** and/or **3**, a small amount of side products that may be formed during the synthesis of the fluorescent whitening agents, water, and optionally preservatives. In another preferred embodiment, the composition contains less than 0.1 weight-% of solubilizing substances, based on 100 weight-% of the composition.

An aqueous composition according to the present invention may be prepared directly from the raw product solution obtained after the synthetic step, preferably by a membrane filtration process, in order to concentrate and desalinate the product solution. An aqueous composition may be also prepared by blending separately obtained aqueous solutions of the compounds of formulae **1**, **2** and/or **3** in the desired ratio, or by dissolving these compounds in powder form in water in the desired ratio. In case that preservatives and/or additives are used, these may be added during the dissolving or blending step, or also afterwards to the obtained mixture of fluorescent whitening agents of formulae **1**, **2** and/or **3**. Furthermore, the pH value of the obtained aqueous composition may be adjusted to the desired value by adding common acids or bases, wherein suitable pH values are in the range of from 6 to 10.

The fluorescent whitening agent (FWA) compositions according to the present invention are used to improve the whiteness and brightness of cellulose-based materials like paper, paperboard and cotton fabric. The fluorescent whitening agent compositions may be also used as an additive to detergents. The fluorescent whitening agent compositions may be used for optically whitening paper at the surface, in particular by coating or by surface sizing. Alternatively, the fluorescent whitening agent compositions may be used in the pulp suspension.

In a preferred embodiment of the invention, the fluorescent whitening agent composition is a composition to be used at the wet end of the papermaking process, and the application process is a process for whitening paper or board, wherein a pulp suspension is first brought into contact with said composition, and paper or board is then afterwards formed from this pulp suspension. In another preferred embodiment, the fluorescent whitening agent composition is used to prepare a size press liquor, film press liquor or a paper coating composition.

In a further preferred embodiment, the invention refers to a process for whitening paper, which comprises providing a pulp or pulp suspension; adding a fluorescent whitening agent composition as described above to the pulp or pulp suspension, preferably in an amount between 0.01 and 5 weight-%, more preferably between 0.02 and 2.5 weight-%, based on 100% of dry pulp weight; producing a paper sheet from the pulp; and drying the sheet. In one embodiment of this process, the fluorescent whitening agent composition is added, after dilution with water and/or optionally additives, in particular after dilution with water, to the pulp or pulp suspension.

The present invention further relates to paper obtainable or obtained by the processes described herein.

In the context of the present invention, a large variety of papers is suitable for whitening: paper made from unbleached or bleached chemical, semi-chemical or mechanical pulp, e.g. chemical short fiber and long fiber pulp, groundwood, thermo-mechanical pulp (TMP) and chemi-thermo mechanical pulp (CTMP). Also paper made from unbleached or bleached deinked pulp (DIP) is suitable. DIP is produced from recovered paper. In papermaking, it is often the case that different grades of mechanical, semi-chemical and chemical pulp as well as recycled pulp are combined, in order to impart certain properties to the paper. Also the use of inorganic fillers besides cellulose pulp is common in papermaking. All papers filled with the commonly used fillers are suitable for whitening in the context of the present invention, e.g. papers filled with GCC (ground calcium carbonate), kaolin, PCC (precipitated calcium carbonate), titanium dioxide, talc, barium sulfate, calcium sulfate and satin white. In preferred embodiments of the invention, a pulp or pulp suspension containing water of low hardness, preferably water having a hardness of not more than 12 °dH, more preferably water having a hardness in the range of from 1 to 10 °dH, and most preferably water having a hardness in the range of from 2 to 7 °dH, is used for papermaking. Herein, water hardness is expressed in degrees of German hardness = °dH.

In the field of uncoated paper and board, the fluorescent whitening agent compositions according to the present invention are preferably used for the whitening of printing and writing papers, folding boxboard and white-top linerboard.

In the case of coated paper and board, generally all coated paper grades are suitable in the present invention, since coating colours for coated printing paper as well as for coated packaging board are typically based on white pigments, and thus the fluorescent whitening of the coating colour is generally desirable and leads to improved whiteness.

In the case of fluorescent whitening of cellulosic textiles with the compositions according to the present invention, cotton fabric is preferred. In the case of use as detergent additive, detergents in powder form are preferred.

The fluorescent whitening agent compositions of the present invention may be added in several ways during the papermaking process: in a pulp preparation stage or in the paper machine wet end, during the surface treatment of the formed paper web, or to the coating colour. Preferably, the fluorescent whitening agent compositions are added as liquid formulations.

The wet end addition of the liquid fluorescent whitening agent formulations may take place in undiluted or diluted form, to the thick stock or to the thin stock. For the wet end addition, typical addition rates of the liquid fluorescent whitening agent formulations according to the present invention are between 0.01 and 5 weight-%, preferably between 0.02 and 2.5 weight-%, related to dry paper weight.

The surface treatment, respectively surface sizing of uncoated paper is usually carried out with an application device that is part of the paper machine. Suitable surface treatment devices are all customary devices that are used in the paper industry for surface sizing, for example the size press and the film press. The treatment liquors are typically based on starch solutions, whereby the starch concentration ranges up to 15 weight-%. In case of the use of dextrin, the concentration of the treatment liquor can be even higher. Dextrin is thermally degraded starch having a relatively low molecular weight. Suitable starches are typically starches derived from potatoes, wheat, maize, tapioca, rice, pea, and mixtures thereof. It is quite common not to use native starches for the surface sizing process, rather degraded or derivatized starches are used. The starch degradation can take place by oxidative treatment, e.g. with hypochlorite, by enzymatic, thermal or chemical treatment. Suitable starch derivatives for the surface sizing process are e.g. cationized starches, cationized starches that have been additionally degraded by oxidation, and hydroxyalkyl substituted starches. Furthermore, the surface treatment liquor may contain inorganic salts, either to adjust the conductivity of the paper, or to influence its printing properties positively, namely for inkjet printing. In addition, the surface treatment liquors may contain defoamers and synthetic sizing agents. The sizing agents are applied to adjust the paper's uptake of water-based liquids during the writing and printing process in a controlled manner. Commonly used paper surface sizing agents are polymer dispersions and polymer solutions, which are containing polymers of the styrene-acrylic ester type, the styrene-acrylic acid type and the styrene-maleic anhydride type. A further common example is alkylketene dimer (AKD), AKD may be used as such or in combination with the above mentioned sizing polymers. Optionally, the treatment liquor may also contain additives to impart special functional properties to the treated paper, like barrier effects and oleophobic behaviour. Such additives can be fluorocarbons, waxes or other paper additives that lead to barrier properties. Furthermore, carrier polymers may be added to the surface treatment liquors, with the aim to reduce the association tendency between fluorescent whitening agent molecules and to increase the greening limit, for example linear polyethylene glycol or polyvinyl alcohol.

The liquid fluorescent whitening agent formulations according to the present invention are added to the described size press and film press liquors, respectively, in the range of from 0.1 to 5 weight-%, related to the total amount of liquor.

Suitable coating colours in the context of the present invention are all common paper coating colours, based on white pigments and binders. Examples for typical white pigments to produce coating colours are GCC, kaolin respectively clay, calcined clay, PCC, talc, titanium dioxide and calcium sulfate. Examples for typical binders are, on one hand, polymer dispersions, respectively latices, based on polymers of the types styrene-butadiene, styrene-acrylic ester, vinyl acetate and vinyl acetate-acrylic ester. On the other hand, modified starches and dextrins are commonly used binders as well, often in combination with the above mentioned polymer dispersions. In some cases, casein is used as binding agent. Coating colours furthermore contain cobinders, e.g. polyvinyl alcohol and carboxymethyl cellulose. Additionally, dispersing agents may be added to the coating colour in order to stabilize the pigment particles, often the major part of dispersing agent is however already contained in the pigment slurry that is used as starting material to prepare the coating colour. But it is also possible to start from the white pigments in dry form. In this case, the first step of the coating colour preparation is typically the dispersion of the white pigments to form the corresponding pigment slurries. Thereafter, the blending of the components of the coating colour is started. Typical dispersing agents are polyacrylic acid or modified polyacrylic acid in form of their salts, oligophosphates and polyphosphates. Moreover, coating colours typically contain thickening substances, in order to adjust a certain desired viscosity, needed for the further processing, and also a certain degree of water retention. Examples for thickeners are carboxymethyl cellulose, alginates, or fully synthetic thickener polymers based on acrylates. Further common coating colour additives are tinting dyes or tinting pigments, defoamers, polyethylene glycol and optionally stearates.

The liquid fluorescent whitening agent formulations according to the present invention are added to the described coating colours in an amount of 0.05 to 4.0 weight-% and preferably between 0.1 and 2.5 weight-%, related to the total pigment weight in the coating colour.

All commonly used paper coating processes are suitable in the context of the present invention, for example film press coating, blade coating, curtain coating and spray coating.

The term paper coating is normally used, once the coating colour forms a fully closed layer on the base paper, this is normally the case above a coat weight of approx. 5-6 g/m². Besides the paper coating process, the term pigmentation describes also a common process, whereby the paper surface is treated in a similar way to the above described surface sizing process, but with the difference that pigments are an essential part of the treatment liquor, optionally combined with further binders besides starch. The coat weight during the pigmentation process is typically below 5-6 g/m². The pigmentation of a given base paper is typically used to improve its optical properties, as well as the printability and the evenness of the paper surface. The fluorescent whitening agent compositions according to the present invention are also suitable for the pigmentation process to achieve an increase of brightness and whiteness.

The aqueous fluorescent whitening agent compositions according to the present invention exhibit high storage stability and ease of application. Simultaneously, they provide high affinity, respectively substantivity, to cellulose fibers, and a high brightening and whitening performance.

The fluorescent whitening agent compositions of the present invention allow the production of paper with high whiteness and brightness. Under certain conditions, in particular when a papermaking process uses rather soft water, the fluorescent whitening agent compositions of the present invention provide better paper brightness and whiteness than the fluorescent whitening agent compositions as described in EP 2 478 153 A1. The whiteness of the produced papers can be characterized by the CIE whiteness according to the CIELa*b* system.

The present invention further relates to a fluorescent whitening agent having the formula **2** 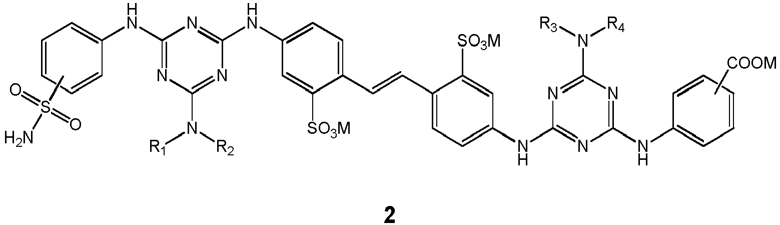 wherein
R₁, R₂, R₃ and R₄ represent, independently of each other, hydrogen, cyano, C₁-C₄ alkyl, C₂-C₄ cyanoalkyl, C₂-C₄ hydroxyalkyl, or C₁-C₄ alkoxyalkyl;
or R₁ and R₂ or R₃ and R₄ independently of each other together with the N atom form a morpholine, piperidine or pyrrolidine ring;
or R₁, R₂, R₃ and R₄ represent, independently of each other, -(CH₂)ᵢSO₃M, -(CH₂)ᵢCOOR, -(CH₂)ᵢCONHR, -(CH₂)ᵢOR, where i is an integer from 1 to 3, and R is C₁-C₃ alkyl or has the same meaning as M;
M represents hydrogen, or one equivalent of a cation, in particular Li, Na, K, Ca, Mg, ammonium, or ammonium which is mono-, di-, tri- or tetrasubstituted by C₁-C₄ alkyl or C₂-C₄ hydroxyalkyl, as well as mixtures of said cations.

In preferred embodiments of the fluorescent whitening agent of formula **2**, R₁, R₂, R₃ and R₄ represent, independently of each other, hydrogen, methyl, or C₂-C₄ hydroxyalkyl, in particular R₁, R₂, R₃ and R₄ represent hydroxyethyl. In another preferred embodiments, the -SO₂NH₂ substituent is located in the para-position, and the -COOM substituent is located in the ortho-position.

The fluorescent whitening agent having the formula **2** can be prepared and used in the same manner as described above for the fluorescent whitening agent composition of the invention.

The following examples illustrate the invention and show preferred embodiments without limiting the scope of protection.

### Examples

### General preparation conditions

A 4l glass reactor equipped with a condenser, a propeller stirrer, a pH electrode and a cooling and heating jacket, connected to a thermostate, was used for all preparation examples. Softened water was used for all preparation examples 1-4 and the pertaining preparations of raw material solutions.

4,4'-diaminostilbene-2,2'-disulfonic acid (trivial name: DAS) was first transferred into its sodium salt form by dissolving it in water at ambient temperature under stirring, while adding 1 equivalent of sodium hydroxide. An aqueous solution of sodium hydroxide with 10.4% strength was used for this purpose. Stirring was continued until a clear solution was obtained. The resulting solution of the DAS disodium salt had a concentration of 12.20 weight-%.

2-aminobenzoic acid (trivial name: anthranilic acid) was first transferred into its sodium salt form by dissolving it in water at ambient temperature under stirring, while adding 1 equivalent of sodium hydroxide. An aqueous solution of sodium hydroxide with 10.4% strength was used for this purpose. Stirring was continued until a clear solution was obtained.

The resulting solution of the sodium salt of anthranilic acid had a concentration of 13.93 weight-%.

4-aminobenzenesulfonamide (trivial name: sulfanilamide) was dissolved in water at ambient temperature under stirring and under the addition of an aqueous sodium hydroxide solution with 10.4% strength. The molar ratio of NaOH to 4-aminobenzenesulfonamide was 2:1. Stirring was continued until a clear solution was obtained. The resulting solution had a concentration of 8.50 weight-% of 4-aminobenzenesulfonamide.

### General analytical conditions

Extinction value: The obtained FWA solutions were characterized by measuring their extinction in a 1 cm cuvette at 350 nm, using a Uvikon XS spectrophotometer. Diluted samples containing 0.01 weight-% of the FWA solution were prepared prior to each measurement using demineralized water. The measured extinction value was then calculated back to a hypothetical aqueous solution containing 1.00 weight-% of the original FWA solution, the thus obtained value is called E1/1 value.

HPLC: The obtained FWA solutions were analyzed with a HPLC device from Shimadzu, the peak detection took place at 350 nm. All detected peaks were summed up to 100 area-%.

### Preparation Example 1:

### Reaction step 1:

650 g of water were added to the reactor and the stirrer was started. Stirring was maintained through the course of the whole synthesis. 11.0 g of sodium chloride and 0.1 g of NaHCO₃ were added and dissolved under stirring. The mixture was then cooled to 6 °C. Then, 1.0 g of the dispersant LUCRAMUL^{®} AG 103 (from LEVACO Chemicals GmbH) were added and mixed in during 1 minute of continued stirring.

100.0 g of cyanuric chloride (0.542 mol) were then added to the reactor, followed by the addition of 100.0 g of water, which had a temperature of 6 °C. Stirring was continued for 30 minutes to disperse the cyanuric chloride in water. The temperature was maintained at 6 °C and the pH remained in the range of 5.5 to 7.0.

Then, 884.0 g of the DAS disodium salt solution, containing 0.260 mol of DAS disodium salt were added to the reactor with constant speed during 90 minutes. The pH in the reaction mixture was kept in the range of 4.0-4.5 by simultaneous addition of an aqueous NaOH solution with 10.4% strength during the whole addition time of the DAS disodium salt solution. The reaction temperature was allowed to raise to 16 °C during the first hour of addition, then the temperature was kept at 16 °C for the rest of the addition time. After completion of the addition of the DAS disodium salt solution, the pH was adjusted to a value in the range of 4.3-4.7 with the NaOH solution. 207.0 g of the NaOH solution were added in total during and after addition of the DAS disodium salt solution.

Stirring was then continued for another 20 minutes at 16 °C, then the temperature was raised to 20 °C.

### Reaction step 2:

First, the pH of the reaction mixture was adjusted to a value of 6.8 by careful addition of an aqueous NaOH solution having 10.4% strength. Then the temperature was raised in a linear fashion from 20 to 60 °C during the course of 60 minutes. Simultaneously with the start of this temperature ramp, 460.1 g of the solution of the sodium salt of anthranilic acid (0.403 mol) were added to the reactor with constant speed over 30 minutes. At the same time, the pH of the reaction mixture was kept in the range of from 6.6 to 7.0 by addition of an NaOH solution having 10.4% strength. Titration with this NaOH solution was continued after completion of the addition of the anthranilic acid sodium salt solution to maintain the observed pH in the range of from 6.6 to 7.0, until 60 °C were reached. 152.7 g of the NaOH solution were added in total to this point of reaction step 2.

The temperature was then increased from 60 to 75 °C in a linear fashion during the course of 60 minutes, and then kept at 75 °C. Simultaneously to the start of this second temperature ramp, the reaction mixture was titrated with the alkaline solution of sulfanilamide in order to maintain the pH value of the reaction mixture at 6.8. The titration with this solution was maintained during the temperature increase from 60 to 75 °C, and then continued at 75 °C until the pH value remained almost stable at 6.8, meaning that the addition rate of the alkaline sulfanilamide solution dropped below **2** g during 10 minutes titration time. In total, 271.9 g of the alkaline sulfanilamide solution, containing 0.134 mol sulfanilamide, were added.

### Reaction step 3:

74.2 g of an aqueous solution of diethanolamine, having an active content of 91.0 weight-%, were added to the reaction mixture with constant speed during 10 minutes. The temperature was then raised to 100 °C during 45 minutes. The ongoing reaction with diethanolamine led to a drop of pH. When the pH value had reached 8.0, the addition of an aqueous NaOH solution with 10.4% strength was started and the pH was maintained at 8.0 through addition of this solution. After having reached 100 °C, stirring was continued for further 3 hours while the pH was still maintained at 8.0. In total, 179.6 g of the NaOH solution were added during this step. The resulting FWA solution was then cooled to 55 °C, filtered through a fluted paper filter, and allowed to cool furthermore down to 25 °C.

The resulting yellowish FWA solution had an E1/1 value of 54.

HPLC analysis gave the following results: the component according to the general formula **1** with the -SO₂NH₂ substituents in para-position, R₁ - R₄ = CH₂CH₂OH and M = Na⁺ was detected with 5.4 area-% at a retention time of 23.9 minutes.

The component according to the general formula **2** with the -SO₂NH₂ substituent in para-position, the -COOM substituent in ortho-position, R₁ - R₄ = CH₂CH₂OH and M = Na⁺ was detected with 26.8 area-% at a retention time of 31.4 minutes.

The component according to the general formula **3** with the -COOM substituents in ortho-position, R₁ - R₄ = CH₂CH₂OH and M = Na⁺ was detected with 54.9 area-% at a retention time of 37.5 minutes:

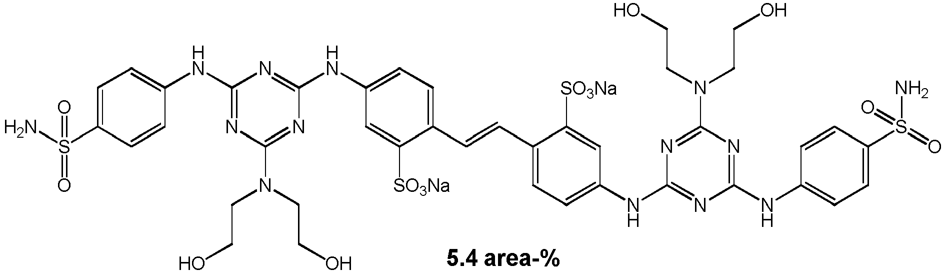

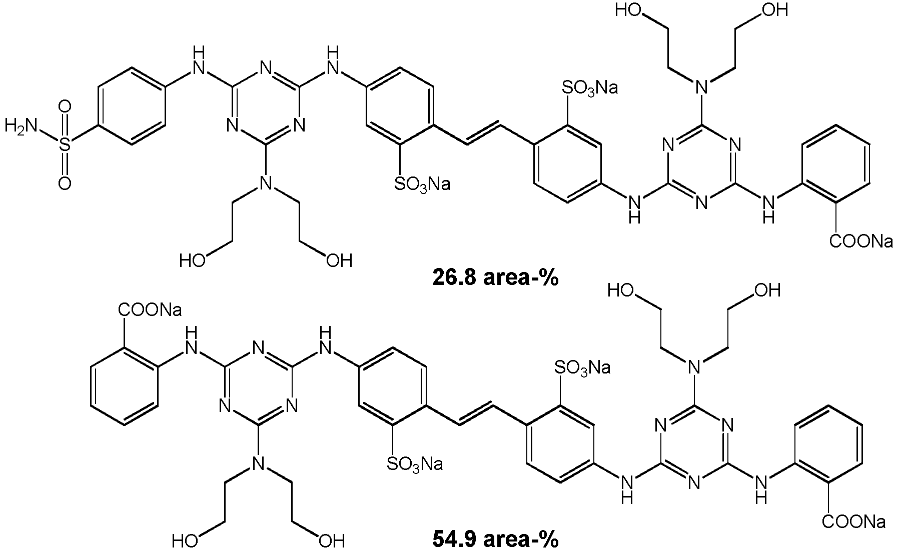

### Preparation Example 2:

Preparation example 1 was repeated with the following changes during reaction step 2:
429.7 g of the solution of the sodium salt of anthranilic acid, corresponding to 0.376 mol, were used.

326.2 g of the alkaline solution of sulfanilamide, corresponding to 0.161 mol sulfanilamide, were used.

142.4 g of an aqueous NaOH solution having 10.4% strength were added during the first temperature ramp of reaction step 2.

The resulting yellowish FWA solution had an E1/1 value of 53.

HPLC analysis gave the following results: the component according to the general formula **1** with the -SO₂NH₂ substituents in para-position, R₁ - R₄ = CH₂CH₂OH and M = Na⁺ was detected with 5.7 area-% at a retention time of 23.6 minutes.

The component according to the general formula **2** with the -SO₂NH₂ substituent in para-position, the -COOM substituent in ortho-position, R₁ - R₄ = CH₂CH₂OH and M = Na⁺ was detected with 29.4 area-% at a retention time of 31.0 minutes.

The component according to the general formula **3** with the -COOM substituents in ortho-position, R₁ - R₄ = CH₂CH₂OH and M = Na⁺ was detected with 48.7 area-% at a retention time of 36.9 minutes.

### Preparation Example 3:

Preparation example 1 was repeated with the following changes during reaction step 2:
398.7 g of the solution of the sodium salt of anthranilic acid, corresponding to 0.349 mol, were used.

378.9 g of the alkaline solution of sulfanilamide, corresponding to 0.187 mol, were used.

132.5 g of a NaOH solution having 10.4% strength were added during the first temperature ramp of reaction step 2.

The resulting yellowish FWA solution had an E1/1 value of 51.

HPLC analysis gave the following results: the component according to the general formula **1** with the -SO₂NH₂ substituents in para-position, R₁ - R₄ = CH₂CH₂OH and M = Na⁺ was detected with 8.9 area-% at a retention time of 23.7 minutes.

The component according to the general formula **2** with the -SO₂NH₂ substituent in para-position, the -COOM substituent in ortho-position, R₁ - R₄ = CH₂CH₂OH and M = Na⁺ was detected with 26.3 area-% at a retention time of 31.1 minutes.

The component according to the general formula **3** with the -COOM substituents in ortho-position, R₁ - R₄ = CH₂CH₂OH and M = Na⁺ was detected with 43.1 area-% at a retention time of 36.9 minutes.

### Preparation Example 4:

Preparation example 1 was repeated with the following changes during reaction step 3: 40.1 g of ethanolamine, having an assay of 99%, were used as aliphatic amine for reaction step **3**.
175.2 g of an aqueous NaOH solution having 10.4% strength were added during reaction step 3.

The resulting yellowish FWA solution had an E1/1 value of 55.

HPLC analysis gave the following results: the component according to the general formula **1** with the -SO₂NH₂ substituents in para-position, R₁ = CH₂CH₂OH, R₂ = H, R₃ = CH₂CH₂OH, R₄ = H and M = Na⁺ was detected with 6.6 area-% at a retention time of 22.5 minutes.

The component according to the general formula **2** with the -SO₂NH₂ substituent in para-position, the -COOM substituent in ortho-position, R₁ = CH₂CH₂OH, R₂ = H, R₃ = CH₂CH₂OH, R₄ = H and M = Na⁺ was detected with 31.0 area-% at a retention time of 30.1 minutes.

The component according to the general formula **3** with the -COOM substituents in ortho-position, R₁ = CH₂CH₂OH, R₂ = H, R₃ = CH₂CH₂OH, R₄ = H and M = Na⁺ was detected with 45.4 area-% at a retention time of 36.0 minutes:

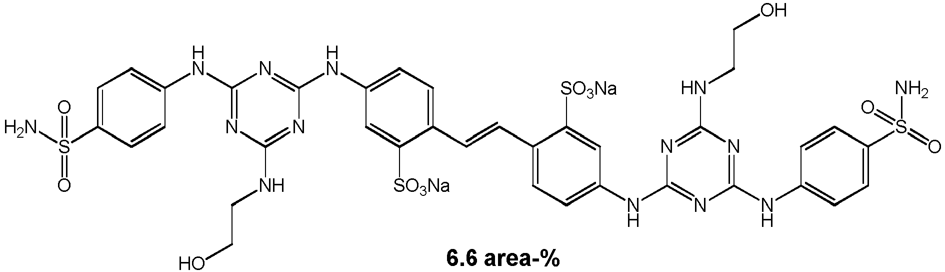

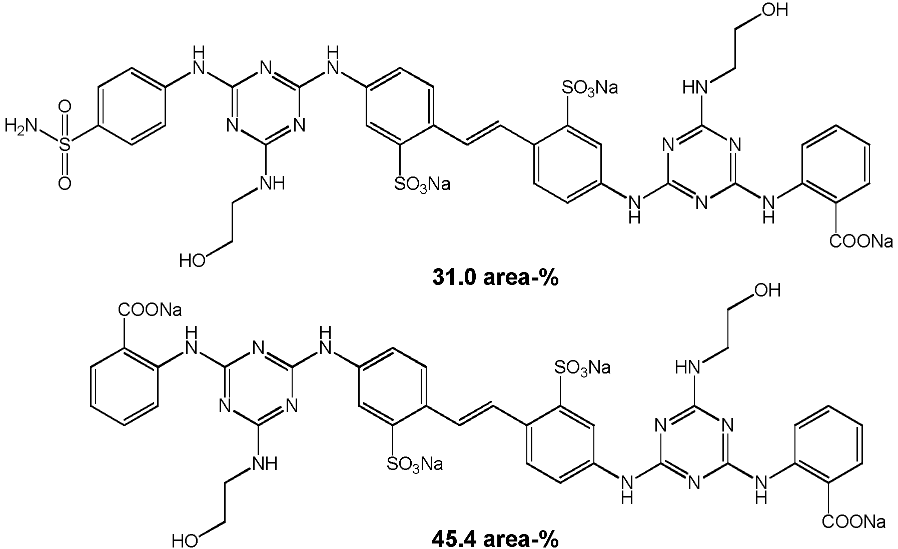

### Preparation Example 5:

2940 g of an FWA solution obtained according to preparation example 1 were mixed at room temperature with 1605 g of demineralized water. The resulting solution was then concentrated and partially desalted in a membrane filtration process at 25 °C with a pressure of 40 bar. 1024 g of a concentrated FWA solution having an E1/1 value of 143 and a chloride content of 0.80 weight-% were thus obtained.

### Preparation Example 6:

2955 g of an FWA solution obtained according to preparation example 2 were mixed at room temperature with 1594 g of demineralized water. The resulting solution was then concentrated and partially desalted in a membrane filtration process at 25 °C with a pressure of 40 bar. 1017 g of a concentrated FWA solution having an E1/1 value of 141 and a chloride content of 0.78 weight-% were thus obtained.

### Comparative Example:

Example 4 of EP 2478153 A1 was repeated, in order to produce an aqueous FWA composition, containing a mixture of three specific FWA compounds.

In step 1 of the reaction, cyanuric chloride was reacted with the disodium salt of 4,4'-diaminostilbene-2,2'-disulfonic acid. In step 2 of the reaction, the thus obtained intermediate was then converted with a mixture (mixing ratio 1:1 by weight) of 4-aminobenzoic acid and 2-aminobenzoic acid. In step 3 of the reaction, the thus obtained intermediate was then reacted with diethanolamine. An aqueous FWA composition was obtained, containing the fluorescent whitening agents as shown below. The given amounts correspond to the determination of area-% by HPLC:

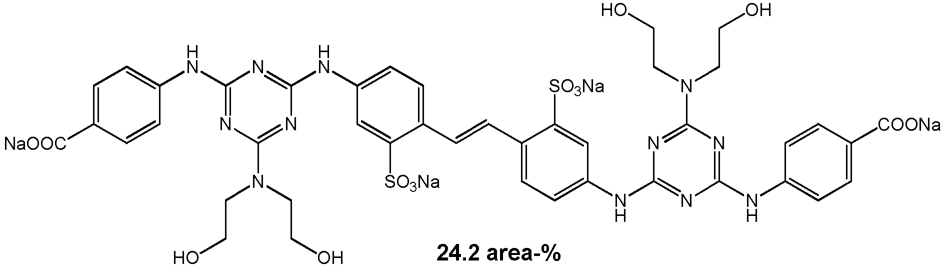

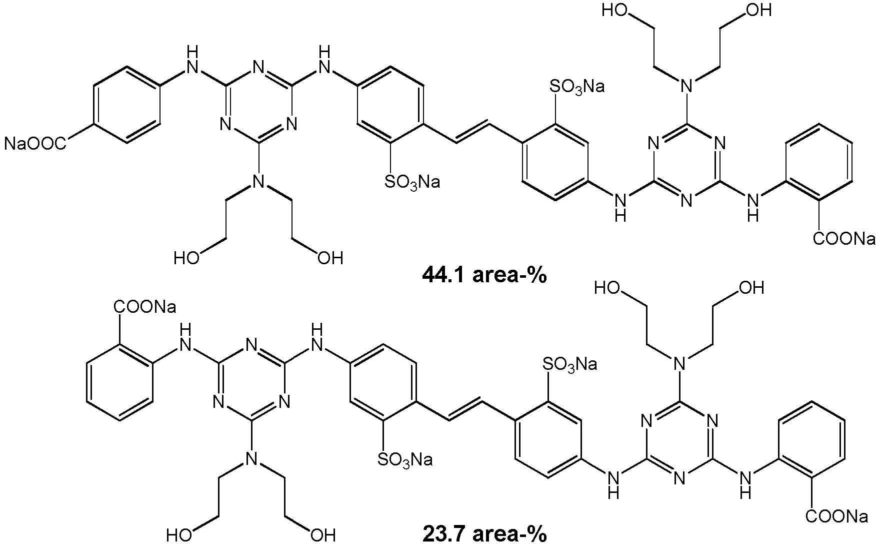

### Application Examples

### Wet end application:

Handsheets containing the FWA compositions from preparation example 1 to 4 were prepared as follows: an aqueous pulp suspension, containing 70 parts by weight of short-fiber chemical pulp and 30 parts by weight of long-fiber chemical pulp and having a freeness of 35 °SR and a consistency of 0.625 weight-%, was used to prepare the handsheets. The pulp suspension was prepared with tap water, having a hardness of 12 °dH. The liquid FWA compositions from the preparation examples 1 to 4 were diluted prior to the handsheet preparation to an E1/1 value of 0.50 by adding softened water.

For each handsheet, 800 ml of the pulp suspension were placed in a beaker and stirred by means of a magnetic stirrer. From each diluted FWA solution, 3.0 g / 6.0 g / 9.0 g, respectively, were added. The pulp suspension was then allowed to stir for 10 minutes.

A handsheet former was then used to prepare handsheets of approx. 5 g dry weight and a basis weight of approx. 120 g/m². In each case, a wet filter paper was placed on the wire of the sheet former, then the pulp suspension was poured onto the wire and the water was removed by a suction pump. A second filter paper was used to cover the wet handsheet. Then the handsheet was pressed and finally dried on a drying cylinder for 10 minutes at 105 °C. The handsheets were afterwards stored in norm climate (23 °C, 50% relative humidity) for 24 hours.

Then, the ISO brightness and CIE whiteness values were determined using a Datacolor Elrepho SF 450 device.

For comparison purposes, a handsheet without addition of FWA was prepared and evaluated in an analogous manner.

The obtained results are summarized in Table **1** below.

**Table 1:**

| **Amount of diluted FWA solution with E1/1 value 0.50 (g)** | **FWA composition from preparation example No.** | **ISO brightness (%)** | **CIE whiteness** |
|---|---|---|---|
| no FWA used | no FWA used | 81.50 | 65.35 |
| 3.0 | 1 | 98.68 | 116.47 |
| 6.0 | 1 | 102.53 | 126.54 |
| 9.0 | 1 | 104.16 | 129.30 |
| 3.0 | 2 | 98.83 | 116.79 |
| 6.0 | 2 | 102.62 | 127.20 |
| 9.0 | 2 | 104.29 | 130.91 |
| 3.0 | 3 | 98.65 | 116.35 |
| 6.0 | 3 | 102.49 | 126.39 |
| 9.0 | 3 | 104.14 | 129.32 |
| 3.0 | 4 | 98.13 | 115.25 |
| 6.0 | 4 | 101.95 | 125.80 |
| 9.0 | 4 | 103.40 | 127.31 |

The results of Table 1 clearly demonstrate that all tested FWA compositions lead to a significant increase of whiteness and brightness, when applied to a papermaking pulp suspension prior to the sheet formation (wet end application).

### Coating application:

A paper coating colour was prepared from the following raw materials:
945 g of the GCC powder Hydrocarb^{®} 90 (from Omya)
405 g of the kaolin "Kaolin KN 83 Granulat" (kaolin content 99%, from Amberger Kaolinwerke) 8.5 g of the dispersant Polysalz^{®} S (approx. 40% solids, from BASF)
270 g of the binder Litex^{®} P 7110 (styrene-butadiene latex with approx. 50% solids, from Synthomer)
40 g of the polyvinyl alcohol solution Polyviol^{®} LL 2850 having 25% solids (from Wacker)
100 g of an aqueous solution of the carboxymethyl cellulose Walocel^{®} CRT 10G (from Dow Wolff Cellulosics) having 10% solids
640.2 g of demineralized water
6.5 g of aqueous sodium hydroxide solution with a strength of 5%

For preparing the coating colour, the above mentioned materials were mixed in the following manner using the given amounts:
Polysalz^{®} S was first stirred into demineralized water at ambient temperature. To this mixture, GCC and kaolin were added and mixed in with a dissolver plate at 500 rpm for 5 minutes. Then the mixture was dispersed with an Ultra-Turrax device at 7000 rpm for 2 minutes. After this, the binder, the polyvinyl alcohol solution and the carboxymethyl cellulose solution were added subsequently under stirring. The pH of the coating colour was adjusted to the range 8.4-8.6 by adding the aqueous sodium hydroxide solution.

Stirring was continued for another 5 minutes. A paper coating colour with a solids content of 62.2 weight-% and a pigment content of 55.7 weight-% was obtained.

From the obtained coating colour batch, 13 portions each weighing 100 g were taken, and then placed in separate glass beakers. The liquid FWA compositions according to the preparation examples 1 to 4 were diluted prior to the addition to an E1/1 value of 50 by adding softened water. The obtained FWA solutions were then added to the coating colour samples of 100 g in amounts of 0.746 g / 1.120 g / 1.493 g, respectively, and stirred in for 5 minutes. For comparison purposes, the coating colour without addition of FWA was applied in the same manner as described below: The thus obtained coating colour samples were each applied to wood-free base paper sheets having a basis weight of approx. 81 g/m². For this purpose, the laboratory coater Erichsen K-Control-Coater, model K 202, was used.

The coated papers were then dried on a drum dryer at 95 °C for 1 minute and afterwards stored for 4 hours at 23 °C and a relative humidity of 50%. The applied coat weight was in the range of 13-15 g/m².

Then, CIE whiteness and ISO brightness values were determined by using a Datacolor Elrepho SF 450 device.

The obtained results are shown in Table 2 below.

**Table 2:**

| **Amount of FWA solution with E1/1 value 50 (% related to dry matter in the coating colour)** | **FWA composition from preparation example No.** | **ISO brightness (%)** | **CIE whiteness** |
|---|---|---|---|
| no FWA used | no FWA used | 87.51 | 75.48 |
| 1.20 | 1 | 95.97 | 101.77 |
| 1.80 | 1 | 97.55 | 105.80 |
| 2.40 | 1 | 98.52 | 108.12 |
| 1.20 | 2 | 96.27 | 102.45 |
| 1.80 | 2 | 97.76 | 106.30 |
| 2.40 | 2 | 98.66 | 108.32 |
| 1.20 | 3 | 96.13 | 102.03 |
| 1.80 | 3 | 97.80 | 106.49 |
| 2.40 | 3 | 98.49 | 108.27 |
| 1.20 | 4 | 96.03 | 101.85 |
| 1.80 | 4 | 97.48 | 105.55 |
| 2.40 | 4 | 98.34 | 107.64 |

The results of Table 2 clearly show that all tested FWA compositions lead to a significant increase of whiteness and brightness, when applied in a paper coating colour.

### Wet end application in water with low hardness:

Handsheets containing the FWA compositions from preparation example 2 and from the comparative example, respectively, were prepared as follows: an aqueous pulp suspension, containing 70 parts by weight of short-fiber chemical pulp and 30 parts by weight of long-fiber chemical pulp and having a freeness of 35 °SR and a consistency of 0.625 weight-%, was used to prepare the handsheets. The pulp suspension was prepared with softened water, which was adjusted to a low water hardness of 2 °dH prior to its use to prepare the pulp suspension. The low hardness was adjusted by addition of a suitable amount of CaCl₂ to softened water, and subsequent dissolution. The amounts of softened water and CaCl₂ were chosen in such manner to yield a Ca²⁺ concentration of 0.357 mmol/l, corresponding to a water hardness of 2 °dH. The liquid FWA compositions from preparation example 2 and from the comparative example were diluted prior to the handsheet preparation to an E1/1 value of 0.50 by adding softened water.

For each handsheet, 800 ml of the pulp suspension were placed in a beaker and stirred by means of a magnetic stirrer. From each diluted FWA solution, 3.0 g / 6.0 g / 9.0 g, respectively, were added. The pulp suspension was then allowed to stir for 10 minutes.

A handsheet former was then used to prepare handsheets of approx. 5 g dry weight and a basis weight of approx. 120 g/m². In each case, a wet filter paper was placed on the wire of the sheet former, then the pulp suspension was poured onto the wire and the water was removed by a suction pump. A second filter paper was used to cover the wet handsheet. Then the handsheet was pressed and finally dried on a drying cylinder for 10 minutes at 105 °C. The handsheets were afterwards stored in norm climate (23 °C, 50% relative humidity) for 24 hours. Then, the ISO brightness and CIE whiteness values were determined using a Datacolor Elrepho SF 450 device.

The obtained results are summarized in Table 3 below:

**Table 3:**

| **Amount of diluted FWA solution with E1/1 value 0.50 (g)** | **FWA composition** | **ISO brightness (%)** | **CIE whiteness** |
|---|---|---|---|
| 3.0 | preparation example 2 | 102.61 | 123.25 |
| 6.0 | preparation example 2 | 106.78 | 133.67 |
| 9.0 | preparation example 2 | 108.32 | 136.85 |
| 3.0 | comparative example | 102.33 | 122.41 |
| 6.0 | comparative example | 106.24 | 132.07 |
| 9.0 | comparative example | 108.02 | 135.97 |

The results of Table 3 clearly demonstrate that the FWA composition according to the present invention (preparation example 2) yields better brightness and whiteness values than the FWA composition from the comparative example, when applied in papermaking conditions with low water hardness. This is attributed to a better affinity of the FWA composition according to the present invention towards cellulose fibers, when used in papermaking conditions with low water hardness.

### Storage stability

The liquid, concentrated aqueous FWA compositions from the preparation examples 5 and 6 were stored for four weeks at 23 °C and at 5 °C, respectively. In all cases, the dissolved FWA molecules remained fully in solution during the storage period, as no formation of solid matter could be observed.

This demonstrates that liquid, concentrated aqueous FWA compositions according to the present invention are storage-stable in cold conditions for at least 4 weeks in the absence of any solubilizing additives.

## Claims

1. A fluorescent whitening agent composition, wherein the composition contains at least two fluorescent whitening agents selected from the fluorescent whitening agents of formula **1**, formula **2** and formula **3:** 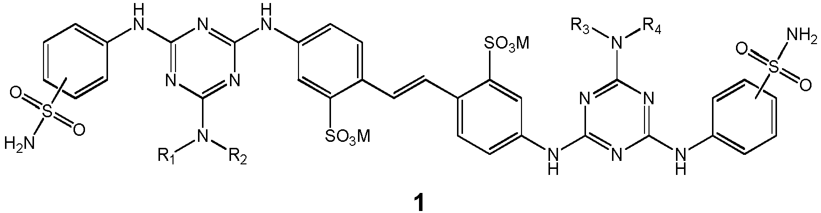 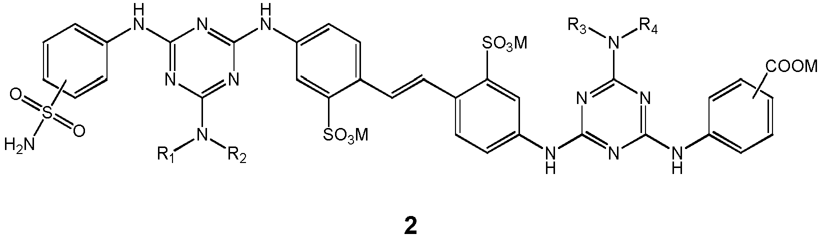 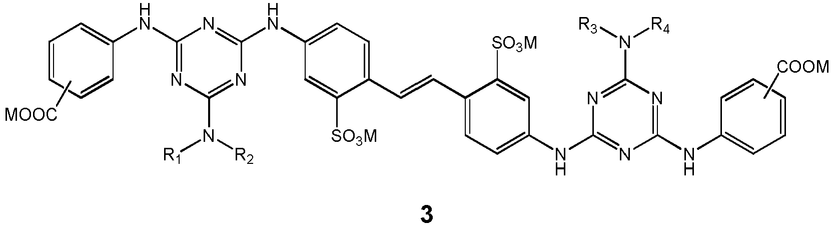 wherein
R₁, R₂, R₃ and R₄ represent, independently of each other, hydrogen, cyano, C₁-C₄ alkyl, C₂-C₄ cyanoalkyl, C₂-C₄ hydroxyalkyl, or C₁-C₄ alkoxyalkyl;
or R₁ and R₂ or R₃ and R₄ independently of each other together with the N atom form a morpholine, piperidine or pyrrolidine ring;
or R₁, R₂, R₃ and R₄ represent, independently of each other, -(CH₂)ᵢSO₃M, -(CH₂)ᵢCOOR, -(CH₂)ᵢCONHR, -(CH₂)ᵢOR, where i is an integer from 1 to 3, and R is C₁-C₃ alkyl or has the same meaning as M;
M represents hydrogen, or one equivalent of a cation, in particular Li, Na, K, Ca, Mg, ammonium, or ammonium which is mono-, di-, tri- or tetrasubstituted by C₁-C₄ alkyl or C₂-C₄ hydroxyalkyl, as well as mixtures of said cations.

2. The fluorescent whitening agent composition according to claim 1, wherein R₁, R₂, R₃ and R₄ represent, independently of each other, hydrogen, methyl, or C₂-C₄ hydroxyalkyl, in particular wherein R₁, R₂, R₃ and R₄ represent hydroxyethyl.

3. The fluorescent whitening agent composition according to claim 1 or 2, wherein the -SO₂NH₂ substituents are located in the para-position, and the -COOM substituents are located in the ortho-position.

4. The fluorescent whitening agent composition according to any of claims 1 to 3, wherein the composition contains the fluorescent whitening agents of formula **1**, formula **2** and formula **3**.

5. The fluorescent whitening agent composition according to any of the preceding claims, wherein the composition contains at least one fluorescent whitening agent of formula **1** in an amount of 2 to 30 weight-%, at least one fluorescent whitening agent of formula **2** in an amount of 10 to 80 weight-%, and at least one fluorescent whitening agent of formula **3** in an amount of 10 to 80 weight-%, in each case based on 100 weight-% of the total amount of the present fluorescent whitening agents of the formulae **1**, **2** and/or **3**.

6. The fluorescent whitening agent composition according to any of the preceding claims, wherein the composition contains water, in particular in an amount of 55 to 90 weight-%, based on 100 weight-% of the total amount of the fluorescent whitening agents and water; or wherein the composition contains less than 0.1 weight-% of solubilizing substances, based on 100 weight-% of the composition.

7. A fluorescent whitening agent having the formula **2** 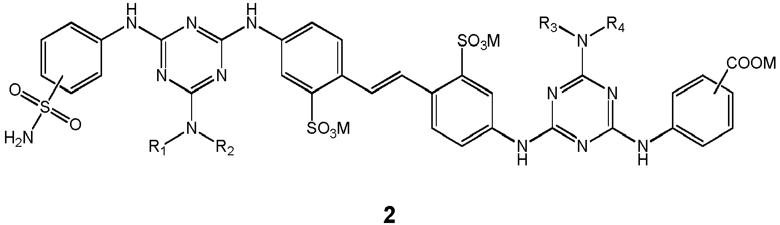 wherein
R₁, R₂, R₃ and R₄ represent, independently of each other, hydrogen, cyano, C₁-C₄ alkyl, C₂-C₄ cyanoalkyl, C₂-C₄ hydroxyalkyl, or C₁-C₄ alkoxyalkyl;
or R₁ and R₂ or R₃ and R₄ independently of each other together with the N atom form a morpholine, piperidine or pyrrolidine ring;
or R₁, R₂, R₃ and R₄ represent, independently of each other, -(CH₂)ᵢSO₃M, -(CH₂)ᵢCOOR, -(CH₂)ᵢCONHR, -(CH₂)ᵢOR, where i is an integer from 1 to 3, and R is C₁-C₃ alkyl or has the same meaning as M;
M represents hydrogen, or one equivalent of a cation, in particular Li, Na, K, Ca, Mg, ammonium, or ammonium which is mono-, di-, tri- or tetrasubstituted by C₁-C₄ alkyl or C₂-C₄ hydroxyalkyl, as well as mixtures of said cations.

8. The fluorescent whitening agent according to claim 7, wherein R₁, R₂, R₃ and R₄ represent, independently of each other, hydrogen, methyl, or C₂-C₄ hydroxyalkyl, in particular R₁, R₂, R₃ and R₄ represent hydroxyethyl; or wherein the -SO₂NH₂ substituent is located in the para-position, and the -COOM substituent is located in the ortho-position.

9. A process for preparing a fluorescent whitening agent composition according to any of claims 1 to 6, or a fluorescent whitening agent according to claim 7 or 8, by reacting, in step (a), cyanuric chloride with 4,4'-diaminostilbene-2,2'-disulfonic acid or a salt thereof; by reacting, in step (b), the product obtained in step (a) with 2-aminobenzoic acid or 4-aminobenzoic acid or salts thereof, and 2-aminobenzenesulfonamide, 3-aminobenzenesulfonamide or 4-aminobenzenesulfonamide; and by reacting, in step (c), the product obtained in step (b) with aliphatic amines, substituted aliphatic amines or heterocyclic compounds.

10. Use of the fluorescent whitening agent composition according to any of claims 1 to 6, or the fluorescent whitening agent according to claim 7 or 8, for optically whitening paper or board.

11. Use of the fluorescent whitening agent composition according to any of claims 1 to 6, or the fluorescent whitening agent according to claim 7 or 8, for optically whitening cotton fabric or as detergent additive.

12. The use of the fluorescent whitening agent composition according to claim 10, in the pulp suspension (stock).

13. The use of the fluorescent whitening agent composition according to claim 10, for optically whitening paper at the surface, in particular by coating or by surface sizing.

14. A process for whitening paper, comprising providing a pulp or pulp suspension, adding a fluorescent whitening agent composition as defined in any of claims 1 to 6 or a fluorescent whitening agent according to claim 7 or 8, optionally after dilution with water and/or additives, producing a paper sheet, and drying the sheet.

15. Paper obtainable by the process according to claim 13 or 14.
